# EUROPEAN PATENT SPECIFICATION

(11) **EP 3 156 379 B1**
(45) Date of publication and mention of the grant of the patent: **03.04.2019**
(21) Application number: 15806308.1
(22) Date of filing: 08.06.2015
(51) Int. Cl.: C03B 37/083, C03B 37/08

(54) **GLASS-FIBER-PRODUCTION BUSHING**
GLASFASERHERSTELLUNGSBUCHSE
DOUILLE DE PRODUCTION DE FIBRES DE VERRE

(30) Priority: 10.06.2014 JP 2014119430
(43) Date of publication of application: 19.04.2017
(73) Proprietor: Tanaka Kikinzoku Kogyo K.K., Chiyoda-ku Tokyo 100-6422 (JP)
(72) Inventor: OSAWA, Ichizou, Isehara-shi Kanagawa 259-1146 (JP); OSAWA, Toshihiro, Isehara-shi Kanagawa 259-1146 (JP)
(74) Representative: Weickmann & Weickmann PartmbB
(86) International application number: PCT/JP2015/066441
(87) International publication number: WO 2015/190425

(56) References cited:
- JP-A- H09 142 871
- JP-A- 2010 502 543
- JP-U- H0 537 931
- US-A- 3 955 951
- US-A- 5 928 402

## Description

### TECHNICAL FIELD

The present invention relates to a bushing for manufacturing a glass fiber from molten glass. In particular, it relates to a bushing for manufacturing a glass fiber that stably discharges a glass flow to thereby make spinning of a glass fiber possible when the apparatus is operated for a long period of time.

### BACKGROUND ART

A glass fiber is manufactured by supplying a glass basis material, which is obtained by making molten glass that is a glass raw material (cullet) having been heated to high temperatures clear and homogeneous, to a bushing. The bushing for manufacturing a glass fiber is a box-shaped container provided with a bushing plate at a bottom face. The bushing plate is one in which a plurality of nozzles are attached, arranged in lines, to the bottom face of a base plate, and, from the nozzle, the glass basis material is discharged in a fibrous shape. The glass fiber discharged from the nozzle is wound while being cooled. An example of a process for manufacturing a glass fiber using the bushing, there is a method as described in PTL 1.

Since the glass basis material in a molten state is at high temperatures of 1500°C or higher and a speed at which the glass basis material is discharged from the nozzle occasionally reaches several thousand meters per minute, the use environment of the bushing plate is considerably severe. Further, slight interfusion of impurities is not allowed for glass fibers as products. From these causes, application of a material having high stability and strength is required for the bushing plate so as not to pollute the glass basis material. In consideration of this point, as a constituent material for the bushing plate, a precious metal material such as platinum or platinum alloy is used. Precious metals and alloys of the metals are excellent in chemical stability and high temperature strength, in particular, are good in high temperature creep properties, and are suitable as a constituent material of structures that are subjected to stress loading under high temperatures, such as glass manufacturing apparatuses.

### CITATION LIST

### PATENT LITERATURE

PTL 1: Published Japanese translation of PCT patent application No. 2001-513478

### SUMMARY OF INVENTION

### TECHNICAL PROBLEM

A bushing formed of a precious metal material such as platinum material makes it possible to spin stably a glass fiber even under high temperature circumstances in which molten glass circulates. However, as a result of on-site surveys, the present inventors grasp such cases that occasionally homogeneous glass fibers cannot be obtained as the result of apparatus operation for a long period of time. When the cause was examined, it was confirmed that, in a nozzle array of the outermost layer (outermost side) of a nozzle group arranged in lines, a tip part of the nozzle was damaged. When such a damage of a nozzle exists, dimension or flow of molten glass to be discharged becomes uneven. Such disturbance in a glass flow is one generated divisionally relative to the glass flow discharged from all nozzles of the bushing, but hinders stable manufacturing of a glass fiber.

Therefore, it is an object of the present invention to provide a bushing plate for manufacturing a glass fiber capable of stably discharging a uniform glass flow for a long period of time.

### SOLUTION TO PROBLEM

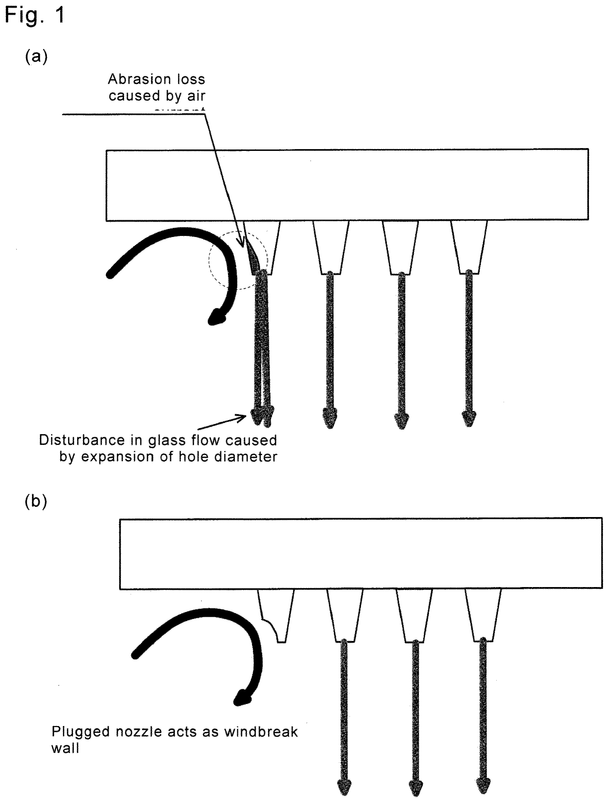

In order to solve the above-described problem, first, the present inventors examined causes of the above-described damage of the nozzle, in particular, causes of selective generation of damage in a nozzle lying in the outermost layer of a nozzle group. Here, what is given first priority as a factor of abrasion of the nozzle is abrasion caused by volatilization of platinum. As described above, the glass basis material supplied to the bushing plate is at high temperatures of 1500°C or higher. Volatilization loss of platinum in platinum and platinum alloys generated under such high temperatures is conventionally known also in the field of glass manufacturing. However, even if the volatilization loss of platinum is the factor of damage of the nozzle, the volatilization loss alone may not lead to selective damage in the nozzle array of the outermost layer. Thus, the present inventors considered furthermore, and, as the result, guessed that a flow of air (air current) around the bushing plate accelerated the abrasion in the nozzle array of the outermost layer. As described above, the discharge speed of fibrous glass from the nozzle is several thousand meters per minute, and, around the bushing plate from which a glass fiber of high temperatures is discharged at such high speed, a high-speed air current along the glass discharge direction is generated. Further, what is most affected by the influence of the air current is the tip part of the nozzle of the outermost layer, and it is considered that the volatilization loss of platinum is accelerated at the site caused by the air current, and that the abrasion is generated (Fig. 1(a)).

As a measure considered for such a case where abrasion accelerated by the air current is generated in a nozzle lying in the outermost layer, there is a measure of setting up a member such as a windbreak wall around the nozzle group to thereby protect the nozzle or adjusting an air current around the bushing. However, there is a fear of increase in weight of the whole bushing caused by adding an additional member such as a windbreak wall to the base plate. Further, to a windbreak wall exposed to high temperatures as is the case for the nozzle and the base plate, preferably a precious metal is applied as the material, in the same way as the nozzle etc., and the material cost is also feared.

The present inventors considered causes of the damage of the above-described nozzle and, as a suitable measure, tried to plug a nozzle lying in the outermost layer of a nozzle group, in which the damage was generated easily. Fundamentally, a nozzle is a hollow tubular body and is a member aiming at causing a fluid to flow through the inside, and to plug the nozzle is to erase the function. By plugging even a part of nozzles, the number of glass fibers discharged from the bushing decreases. However, for a normal operation of a nozzle, no generation of damage is assumed. Discharge of a fluid from a damaged nozzle is unstable, which may influence the quality of the whole glass fiber to be manufactured. The present inventors considered that the stability of fiber spinning from nozzles of the whole bushing was the item of the highest priority, and decided to plug nozzles lying in sites in which abrasion/damage were estimated.

That is, the present invention is a bushing for manufacturing a glass fiber that includes a base plate, a plurality of nozzles for discharging molten glass, and a nozzle group in which the plurality of nozzles is arranged in lines, being bonded to the base plate, wherein nozzles constituting at least one nozzle array among nozzle arrays of outermost layers of the nozzle group are plugged to a half or more of a nozzle length from a tip in depth.

In the present invention, with respect to nozzles configuring a row of the outermost layer of a nozzle group, respective holes are plugged in a certain length or more from a tip. The plugged nozzle does not discharge glass even if abrasion/damage are generated at the tip, and, as the whole bushing, stable spinning of a glass fiber is possible.

Further, a series of plugged nozzles does not exert original function as a nozzle, but may act as a windbreak wall for protecting a group of nozzles lying inside the plugged nozzles from influence of an air current (Fig. 1(b)). The action is also useful for stable spinning of a glass fiber.

As described above, the bushing plate for manufacturing a glass fiber according to the present invention is a bushing plate in which nozzles of the outermost layer of nozzles arranged in lines are plugged. Accordingly, other configurations such as a base plate are the same as configurations of a conventional bushing plate.

The base plate is a member for causing the glass basis material in a molten state to stay, and has a plate shape or box shape by bending processing. The base plate is provided with a through hole in a connecting positon with the nozzle. Material of the base plate is formed of platinum or platinum alloy, and, preferably, in addition to platinum or platinum - rhodium alloy (rhodium concentration: 5 to 20 wt%), dispersion strengthened platinum alloy or dispersion strengthened platinum - rhodium alloy is applied for the purpose of improving strength.

As to the nozzle too, basically one used in conventional bushing plate for manufacturing a glass fiber is applied. A plurality of nozzles is arranged and bonded in lines at the bottom surface of the base plate. The shape of the nozzle is also not particularly limited, and the nozzle may be a straight tube or a tapered tubular body. Further, platinum or above-described platinum alloy is also applied to the material of the nozzle.

Further, in the present invention, nozzles configuring nozzle arrays of the outermost layer are plugged from the tip. As to the depth of the plug, a site of a half or more of a nozzle in length must be blocked. The reason is that, when the depth of the plug is too shallow, a hole is penetrated caused by the abrasion of the nozzle in a use process to thereby allow molten glass to discharge.

A plugged nozzle is, more preferably, plugged over the whole nozzle length and preferably has no hole on either end. Even if a hole exists at a root of a nozzle, the nozzle does not contribute to glass spinning, and, in addition, molten glass flows into/remains in the hole and removal of the glass is required. Here, as a method for plugging a nozzle, a wire material/rod material may be inserted into a hole of an ordinary nozzle having a hole to thereby plug the hole, or a tubular-but-solid bpdy without a hole from the beginning may be utilized.

Meanwhile, although number of nozzles to be installed on the bushing plate for manufacturing a glass fiber is not particularly limited, usually, many bushing plates include 200 to 8000 nozzles. On this occasion, groups of nozzles arranged at regular intervals may be arranged in a shape of a plurality of islands. On this occasion, plugged nozzles may be disposed in nozzle arrays lying along four sides of a base plate in respective nozzle groups. Further, all nozzles may be arranged at regular intervals on a base plate to thereby form a single group of nozzles. In this case, plugging of nozzles in nozzle arrays of four sides of the nozzle group is preferable.

### ADVANTAGEOUS EFFECTS OF INVENTION

As explained hereinbefore, the bushing plate for manufacturing a glass fiber according to the present invention is one obtained by plugging a part of nozzles, as compared with a conventional bushing plate. In the bushing, a glass fiber cannot be manufactured from the plugged nozzle, but, since number of points changed from conventional bushings is small, a glass fiber can be manufactured stably while increase in manufacturing cost and weight is suppressed.

### BRIEF DESCRIPTION OF DRAWINGS

Fig. 1 is a view illustrating an abrasion state of the tip of a nozzle of the outermost layer caused by an air current.
Fig. 2 is an external view of a bushing plate for manufacturing a glass fiber according to the embodiment.

### DESCRIPTION OF EMBODIMENTS

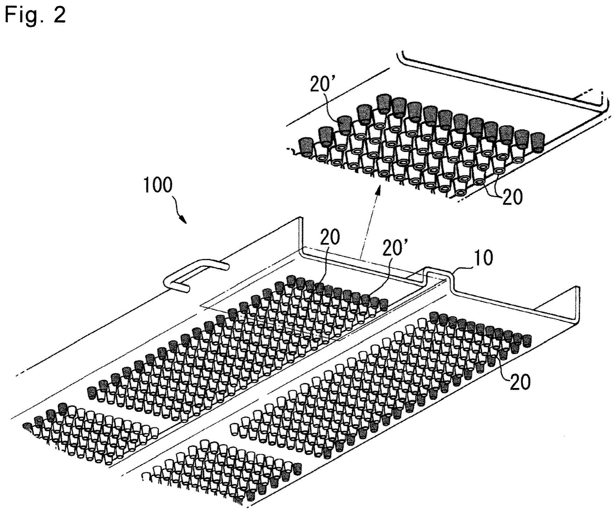

Hereinafter, the embodiment of the present invention will be explained. Fig. 2 roughly illustrates a bushing plate 100 for manufacturing a glass fiber according to the embodiment. In Fig. 2, the bushing plate for manufacturing a glass fiber is provided with a base plate 10 and a plurality of nozzles 20 arranged in lines at the bottom face of the plate.

The base plate 10 is formed by subjecting a plate material (1.5 mm in thickness) made of platinum to bending processing, and is processed by bending end parts while providing a convex part in the center (bottom face dimension: 444 mm × 120 mm). The reason why the convex part is provided in the center is to rectify a molten glass basis material flowing from the upper side.

The nozzles 20 form four nozzle groups like islands and are bonded to the base plate 10. In an individual nozzle group, 20 x 20 nozzles are bonded at intervals of 6.4 mm. Number of nozzles bonded to the base plate 10 is 1600 in total.

Each of the nozzles 20 is a tapered cylindrical tubular body of 2.94 mm (outer diameter at the uppermost end part) x 2.35 mm (outer diameter at the lowermost end part) in an external shape. Further, each of these is made of platinum. Further, among nozzles in respective nozzle groups, nozzles 20' configuring nozzle arrays of the outermost layer lying along four sides of the base plate are plugged. Furthermore, the other nozzles are ordinary ones having a through-hole of 1.65 mm φ.

With respect to processes for manufacturing respective nozzles, a solid member formed into the above-described external shape and dimension was prepared, and the solid member was used as it was as the plugged nozzle 20', or was subjected to boring processing to thereby give the ordinary nozzle 20. Subsequently, these nozzles were bonded to the base plate 10. With respect to installation of the nozzles 20, 20' on the base plate 10, holes of 2.76 mm were previously bored at places of the base plate 10 at which respective nozzles were to be installed, the nozzles 20, 20' were inserted into holes, which was then heated in an electric furnace to carry out preparatory bonding and was furthermore welded at a base of the bonded part from an upper face of the base plate (inflow surface of molten glass) with a YAG laser.

As a manufacturing example of a glass fiber using the bushing plate for manufacturing a glass fiber according to the embodiment, first, to the bushing plate, a terminal and a box-shaped side flange are bonded to thereby configure a bushing being a box-shaped container. The bushing is incorporated into a glass manufacturing apparatus. The glass manufacturing apparatus is provided with a melting tank of a glass raw material compounded according to a target composition, a cleaning tank of the molten glass and a stirring tank stirring and homogenizing the cleaned molten glass, and the bushing is installed on the downstream side of these tanks. A glass fiber discharged from the bushing is wound appropriately.

Here, with a glass manufacturing apparatus provided with the bushing plate for manufacturing a glass fiber according to the embodiment shown in Fig. 2, glass fiber manufacturing was carried out for one year. During the period, remarkable uncommonness was not found out in the bushing plate. In addition, spinning of the glass fiber was also stable. Further, after the one-year operation of the apparatus, the apparatus was shut down and nozzles of the bushing plate were checked. As the result, abrasion was observed at a tip part of a part of nozzles lying in rows of plugged nozzles, and a side face of a nozzle had been shaved in a range of around 1.5 mm from the tip. On the other hand, for ordinary nozzles lying in the inside, completely no abrasion was observed. It is understood that plugged nozzles lying in the outermost layer acted as a sacrifice and protected a group of nozzles lying in the inside.

### INDUSTRIAL APPLICABILITY

The bushing plate for manufacturing a glass fiber according to the present invention suppresses abrasion and damage of a group of nozzles carrying out fiber spinning, as a result of plugging a part of nozzles. According to the present invention, a stable operation of a glass manufacturing apparatus for a long operation period can be made possible, and a good-quality glass fiber can be manufactured effectively.

## Claims

1. A bushing for manufacturing a glass fiber,
the bushing comprising:
a base plate:
a plurality of nozzles for discharging molten glass: and
a nozzle group in which the plurality of nozzles are arranged in lines, being bonded to the base plate, wherein
nozzles constituting at least one nozzle array among nozzle arrays of outermost layers of the nozzle group are plugged to a half or more of a nozzle length from a tip in depth.

2. The bushing for manufacturing a glass fiber according to claim 1, wherein a plugged nozzle is plugged over the whole nozzle length.

3. The bushing for manufacturing a glass fiber according to claim 1 or 2, wherein the plugged nozzle is a solid body.

## Patentansprüche

1. Buchse zur Herstellung einer Glasfaser, wobei die Buchse
eine Grundplatte,
eine Vielzahl an Düsen für das Ausgeben von geschmolzenem Glas, und
eine mit der Grundplatte verbundene Düsengruppe, in welcher die Vielzahl an Düsen in Linien angeordnet sind, umfasst,
wobei Düsen, die mindestens eine Düsenanordnung unter Düsenanordnungen von äußersten Schichten der Düsengruppe bilden, zur Hälfte einer Düsenlänge oder mehr von einer Spitze in die Tiefe zugestopft sind.

2. Buchse zur Herstellung einer Glasfaser gemäß Anspruch 1, wobei eine zugestopfte Düse über die gesamte Düsenlänge zugestopft ist.

3. Buchse zur Herstellung einer Glasfaser gemäß Anspruch 1 oder 2, wobei die zugestopfte Düse ein Massivkörper ist.

## Revendications

1. Douille pour fabriquer une fibre de verre,
la douille comprenant :
une plaque de base ;
une pluralité de buses pour décharger du verre en fusion ; et
un groupe de buses dans lequel la pluralité de buses sont agencées en lignes, en étant reliées à la plaque de base, dans laquelle :
des buses constituant au moins un réseau de buses parmi des réseaux de buses de couches les plus externes du groupe de buses sont insérées, sur une moitié ou plus d'une longueur de buse à partir d'une pointe, en profondeur.

2. Douille pour fabriquer une fibre de verre selon la revendication 1, dans laquelle une buse insérée est insérée sur toute la longueur de buse.

3. Douille pour fabriquer une fibre de verre selon la revendication 1 ou 2, dans laquelle la buse insérée est un corps solide.
